# EUROPÄISCHE PATENTSCHRIFT

(11) **EP 4 143 652 B1**
(45) Veröffentlichungstag und Bekanntmachung des Hinweises auf die Patenterteilung: **03.04.2024**
(21) Anmeldenummer: 21723150.5
(22) Anmeldetag: 27.04.2021
(51) Int. Cl.: G05D 1/02, G01S 13/931, G01S 15/931, G01S 17/931

(54) **VERKEHRSREGELKONFORME ENTSCHEIDUNGSFINDUNG IN DYNAMISCHEN VERKEHRSSZENARIEN**
TRAFFIC-RULE-COMPLIANT DECISION-MAKING IN DYNAMIC TRAFFIC SCENARIOS
PRISE DE DÉCISION COMPATIBLE AVEC DES RÈGLES DE TRAFIC DANS DES SCÉNARIOS DE TRAFIC DYNAMIQUE

(30) Priorität: 28.04.2020 DE 102020111486
(43) Veröffentlichungstag der Anmeldung: 08.03.2023
(73) Patentinhaber: Robert Bosch GmbH, 70442 Stuttgart (DE); Mercedes-Benz Group AG, 70372 Stuttgart (DE)
(72) Erfinder: PARK, Chunki, San Jose, California 95124 (US); ULMER, Benjamin, Sunnyvale, California 94086 (US); KLEINDIECK, Jan, 71636 Ludwigsburg (DE); MAUCHER, Dominik, 70190 Stuttgart (DE); KUNZ, Felix, 70567 Stuttgart (DE); KWON, Jinsung, Saratoga, California 95070 (US)
(74) Vertreter: Patentanwaltskanzlei WILHELM & BECK
(86) Internationale Anmeldenummer: PCT/EP2021/060986
(87) Internationale Veröffentlichungsnummer: WO 2021/219638

(56) Entgegenhaltungen:
- EP-A2- 2 028 072
- WO-A1-2006/042512
- DE-A1-102013 222 586

## Beschreibung

Die Erfindung betrifft ein Verfahren zum Bestimmen eines Fahrmanövers eines Fahrzeugs, ein Steuergerät, ein Computerprogramm sowie ein maschinenlesbares Speichermedium.

Die Patentanmeldung beansprucht die Priorität der deutschen Patentanmeldung 10 2020 111 486.9, deren Offenbarungsgehalt hiermit durch Rückbezug aufgenommen wird.

### Stand der Technik

Die Offenlegungsschrift der WO 2006/042512 A1 offenbart ein Verfahren zur Bestimmung relevanter Objekte.

Die Offenlegungsschrift EP 2 028 072 A2 offenbart ein Kraftfahrzeug mit einem Spurwechsel- oder einem Spurhalteassistenzsystem.

Die Offenlegungsschrift DE 10 2013 222 586 A1 offenbart ein Verfahren zur Vermeidung einer Kollision eines Kraftfahrzeugs mit einem falsch fahrenden Fahrzeug.

Die Handhabung von dynamischen Verkehrssituationen wird oftmals durch eingeschränkte Sichtbarkeit bzw. durch Verdeckungen des Erfassungsbereichs einer Umfeldsensorik zusätzlich erschwert. Der Erfassungsbereich der Umfeldsensorik kann beispielsweise durch andere Verkehrsteilnehmer bzw. dynamische Objekte oder durch stationäre Hindernisse, wie Bäume, Häuser oder abgestellte Fahrzeuge, verdeckt werden.

Zum Umsetzen von automatisierten Fahrfunktionen müssen derartige Verdeckungen, welche den Erfassungsbereich der Umfeldsensorik einschränken, berücksichtigt werden. Insbesondere muss eine zukünftige Änderung des Erfassungsbereichs durch eine Bewegung des die automatisierte Fahrfunktion ausführenden Fahrzeugs oder durch Bewegung von dynamischen Objekten, wie beispielsweise Lastkraftwagen, beachtet werden.

Der Erfassungsbereich der Umfeldsensorik des Fahrzeugs kann selbst im Stillstand variieren, wenn Verkehrsteilnehmer den Abtastbereich der Umfeldsensorik verlassen oder in den Abtastbereich hineinfahren.

Es sind Verfahren zum Durchführen eines sogenannten teilweise sichtbaren Markow-Entscheidungsprozesses bekannt. Derartige Verfahren sind jedoch rechenintensiv und können nicht in übliche fahrzeugseitige Steuergeräte implementiert werden.

### Offenbarung der Erfindung

Die der Erfindung zugrunde liegende Aufgabe kann darin gesehen werden, ein Verfahren zum Handhaben von Beeinträchtigungen des Erfassungsbereichs von Sensoren vorzuschlagen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zum Bestimmen eines Fahrmanövers eines Fahrzeugs durch ein Steuergerät bereitgestellt. In einem Schritt werden Messdaten über eine Verkehrssituation mindestens eines Sensors empfangen.

Es wird durch Auswerten der empfangenen Messdaten ein gegenwärtiger Erfassungsbereich bzw. ein gegenwärtiger Sichtbarkeitsgrad des mindestens einen Sensors ermittelt. Der Sichtbarkeitsgrad kann als ein Maß für die Reichweite bzw. die Verdeckung eines Abtastbereichs von mindestens einem Sensor definiert werden. Auf einer offenen Fläche ohne Hindernisse kann der Sichtbarkeitsgrad eines Sensors, welcher den Erfassungsbereich des Sensors darstellt, beispielsweise 100% betragen. Mit zunehmender Anzahl von Hindernissen wird der Sichtbarkeitsgrad verringert bzw. der Erfassungsbereich verkleinert. Der gegenwärtige Sichtbarkeitsgrad stellt den Sichtbarkeitsgrad zum Zeitpunkt des Empfangs der Messdaten dar.

Der Erfassungsbereich kann als eine Fläche oder als ein Volumen ausgestaltet sein, welcher von der Sensorik zum Ermitteln von Messdaten abtastbar bzw. registrierbar ist.

In einem weiteren Schritt wird ein Sensormodell anhand der empfangenen Messdaten erstellt und ein abgeschätzter Erfassungsbereich des mindestens einen Sensors durch Vorwärtssimulation basierend auf einer Fahrzeugposition des Fahrzeugs aus den empfangenen Messdaten modelliert. Vorzugsweise kann das erstellte Sensormodell mit der tatsächlichen Verkehrssituation zum Zeitpunkt der Erstellung bzw. des Empfangs der Messdaten verglichen werden. Durch diese Maßnahme kann die Güte des Sensormodells ermittelt und optional verbessert werden.

Das erstellte Sensormodell wird dazu eingesetzt, eine Änderung des Erfassungsbereichs des mindestens einen Sensors durch mindestens ein Fahrmanöver zu ermitteln. Hierzu kann eine vordefinierte Liste an möglichen Fahrmanövern durch das Sensormodell geprüft werden. Ein Stehenbleiben des Fahrzeugs kann ebenfalls als Fahrmanöver umgesetzt werden.

Anschließend wird ein Fahrmanöver bestimmt, welches durch das Sensormodell zu einer Erhöhung des simulierten Sichtbarkeitsgrads bzw. zu einer Vergrößerung des simulierten Erfassungsbereichs des mindestens einen Sensors führt. Hierzu können die Ergebnisse der verwendeten Fahrmanöver miteinander und/oder mit der gegenwärtigen Verkehrssituation bzw. dem gegenwärtigen Sichtbarkeitsgrad verglichen werden.

Durch das Verfahren können sensorbasierte bzw. messdatenbasierte Sensormodelle erstellt werden, welche zum Optimieren des Erfassungsbereichs bzw. des Sichtbarkeitsgrads nutzbar sind. Insbesondere kann ein zukünftiger Erfassungsbereich der Sensorik des Fahrzeugs erhöht werden, wobei die Entscheidung des auszuführenden Fahrmanövers abhängig von der Verbesserung des Sichtbarkeitsgrads durch das Steuergerät getroffen wird. Der Sichtbarkeitsgrad kann verbessert werden, wenn der Erfassungsbereich des Sensors vergrößert wird. Die Vergrößerung kann dabei in Form eines vergrößerten Winkels und/oder in Form einer vergrößerten Reichweite des Erfassungsbereichs ausgestaltet sein. Der Erfassungsbereich kann vergrößert werden, wenn der Erfassungsbereich durch weniger Hindernisse, durch von der Sensorik weiter entfernte Hindernisse, durch kleinere Hindernisse oder durch keine Hindernisse verdeckt wird.

Nach dem Bestimmen des Fahrmanövers, welches den Erfassungsbereich vergrößert, können durch das Steuergerät Steuerbefehle generiert werden, welche zum Ansteuern des Fahrzeugs verwendbar sind. Das Fahrzeug kann somit zum Durchführen des bestimmten bzw. gewählten Fahrmanövers durch das Steuergerät veranlasst werden.

Das erstellte Sensormodell kann vorzugsweise im Abtastbereich der Sensoren erfasste Verkehrsteilnehmer, statische Objekte und dynamische Objekte berücksichtigen und deren zukünftiges Verhalten vorhersagen. Insbesondere können hierdurch statische und dynamische Faktoren ermittelt werden, welche sich auf den Erfassungsbereich auswirken.

Des Weiteren können zusätzlich zum Erfassungsbereich Vorfahrtsregeln, wie beispielsweise gegenüber nicht sichtbaren bzw. erfassbaren Verkehrsteilnehmern, Kollisionsgefahren, Komfortfaktoren und mögliche Verletzungen von Verkehrsregeln durch das erstellte Sensormodell berücksichtigt werden.

Durch das Verfahren kann die Verkehrssicherheit und der Komfort während eines automatisierten Fahrbetriebs erhöht werden. Des Weiteren kann das automatisiert betriebene Fahrzeug vor einem Blockieren des Verkehrs gehindert und ein besonders flüssiger Verkehrsfluss ermöglicht werden.

Die Entscheidung über das Fahrmanöver kann beispielsweise in Form von Baumsuch-Algorithmen erfolgen. Alternativ oder zusätzlich kann eine Abfolge von Fahrmanövern als vorteilhaft im Hinblick auf den Erfassungsbereich des Sensors sein und somit ausgewählt werden.

Die Baumsuche kann sich über einen Horizont erstrecken, welcher sich über mehrere Sekunden in die Zukunft erstreckt und somit diskret ausgestaltet ist. Vorzugsweise können mögliche Fahrmanöver kontinuierlich neu berechnet werden sobald neue Messdaten von mindestens einem Sensor verfügbar sind.

Dabei können bestehende bzw. aktive Baumsuchen bei einem Vorliegen von neuen Messdaten und/oder Umgebungsinformationen abgebrochen werden.

Alternativ oder zusätzlich können bestehende bzw. aktive Baumsuchen bei einem Vorliegen von neuen Messdaten und/oder Umgebungsinformationen weiterhin ausgeführt werden, wobei mindestens eine neue, parallele, Baumsuche basierend auf den neuen Messdaten gestartet wird.

Sobald eine ausgeführte Baumsuche konvergiert, kann das Resultat der konvergierten Baumsuche verwendet werden. Das Resultat kann vorzugsweise in Form eines Fahrmanövers vorliegen, welches durch das Sensormodell zu einer Vergrößerung des simulierten Erfassungsbereichs führt.

Die Vergrößerung des Erfassungsbereichs resultiert in einem verringerten Verdeckungsgrad des Erfassungsbereichs.

Basierend auf dem Verfahren kann das Fahrzeug beispielsweise bei einem Vorhandensein von statischen Objekten im Fahrzeugumfeld einer Kreuzung als Verhaltenssequenz von mehreren aufeinander folgenden Fahrmanövern ein Heranfahren zu einer Haltelinie, ein langsames Rollen über eine definierte Distanz auf die Kreuzung und ein anschließendes Passieren der Kreuzung vollführen.

Bei einem Vorhandensein von dynamischen Objekten im Fahrzeugumfeld kann das Fahrzeug beispielsweise zuerst an einer Haltelinie stehen bleiben und bei einem ausreichenden Erfassungsbereich die Kreuzung passieren.

Nach einem weiteren Aspekt der Erfindung wird ein Steuergerät bereitgestellt, wobei das Steuergerät dazu eingerichtet ist, das Verfahren auszuführen. Das Steuergerät kann beispielsweise ein fahrzeugseitiges Steuergerät, ein fahrzeugexternes Steuergerät oder eine fahrzeugexterne Servereinheit, wie beispielsweise ein Cloud-System, sein. Das Steuergerät kann vorzugsweise von mindestens einem fahrzeugseitigen Sensor ermittelte Messdaten empfangen und auswerten können.

Darüber hinaus wird nach einem Aspekt der Erfindung ein Computerprogramm bereitgestellt, welches Befehle umfasst, die bei der Ausführung des Computerprogramms durch einen Computer oder ein Steuergerät diesen veranlassen, das erfindungsgemäße Verfahren auszuführen. Gemäß einem weiteren Aspekt der Erfindung wird ein maschinenlesbares Speichermedium bereitgestellt, auf dem das erfindungsgemäße Computerprogramm gespeichert ist.

Das Fahrzeug kann hierbei gemäß der BASt Norm assistiert, teilautomatisiert, hochautomatisiert und/oder vollautomatisiert bzw. fahrerlos betreibbar sein. Beispielsweise kann das Fahrzeug als ein Personenkraftwagen, ein Roboter, eine Drohne, ein Wasserfahrzeug, ein Schienenfahrzeug, ein Robotaxi, ein Industrieroboter, ein Nutzfahrzeug, ein Bus, ein Flugzeug, ein Helikopter und dergleichen ausgestaltet sein.

Gemäß einem Ausführungsbeispiel ist das mindestens eine Fahrmanöver als ein langsames Vorausfahren, ein Einfahren in einen Verkehrsknotenpunkt, ein Abbiegen, ein Anhalten oder als ein Stehenbleiben ausgestaltet und wird zum Ermitteln einer Änderung des Erfassungsbereichs durch das erstellte Sensormodell herangezogen. Hierdurch kann eine Liste von möglichen Fahrmanövern bereitgestellt werden, welche durch das Sensormodell nutzbar sind. Die jeweiligen Fahrmanöver können auch als eine Sequenz aus Fahrmanövern eingesetzt werden, welche nacheinander ausführbar sind.

Bei einem weiteren Ausführungsbeispiel wird der gegenwärtige Erfassungsbereich durch Erkennen von dynamischen Objekten und/oder statischen Objekten anhand der empfangenen Messdaten ermittelt. Durch diese Maßnahme kann der Einfluss des Umfelds auf den Erfassungsbereich bzw. einen Verdeckungsgrad des Erfassungsbereichs abgeschätzt werden. Insbesondere können abgestellte Fahrzeuge, Container, Gebäude, Vegetation und dergleichen zu statischen Objekten zugeordnet werden, welche sich zeitlich voraussichtlich nicht verändern und somit den Erfassungsbereich bei einer unveränderten Position der Sensoren bzw. des Fahrzeugs nicht beeinflussen. Bei dynamischen Objekten kann der Erfassungsbereich auch ohne eine Fahrzeugbewegung des Fahrzeugs verändert werden, an welchem die Sensoren zur Umfelderfassung montiert sind.

Nach einer weiteren Ausführungsform werden unterschiedliche Fahrmanöver parallel oder nacheinander durch das erstellte Sensormodell herangezogen, um eine Änderung des Erfassungsbereichs zu ermitteln. Durch diese Maßnahme können mögliche Fahrmanöver parallel überprüft werden, wodurch das Verfahren schneller ausgeführt werden kann. Bei nacheinander geprüften Fahrmanövern können beispielsweise vordefinierte Prüfungsschritte umgesetzt werden.

Der Vergleich bzw. die Auswahl der Fahrmanöver erfolgt vorzugsweise im Hinblick auf eine Optimierung des Sichtbarkeitsgrads.

Zur Ermittlung des Erfassungsbereichs bzw. eines Verdeckungsgrads des Erfassungsbereichs können auch Karteninformationen durch das Steuergerät empfangen werden.

Gemäß einem weiteren Ausführungsbeispiel wird der gegenwärtige Erfassungsbereich anhand einer sensorisch messbaren Fahrspurintervalle ermittelt, welche anhand der Messdaten ermittelte Fahrspuren durch Rechtecke unterschiedlicher Länge und/oder Breite annähert. Das Verfahren kann somit die sichtbaren Flächen und somit auch den Erfassungsbereich in Form von einer Fahrspurintervallabdeckung definieren und messen. Die Fahrspurintervallabdeckung kann vorzugsweise durch Rechtecke angenähert werden, welche die sichtbaren bzw. durch die Sensorik erfassbaren Fahrspurabschnitte überlagern. Für jeden erfassbaren Fahrspurabschnitt kann ein Rechteck, ein Polygon, ein Dreieck, ein Kreis und dergleichen verwendet werden. Hierdurch kann das Verfahren auf die Flächen beschränkt werden, welche für die automatisierte Fahrfunktion relevant sind.

Des Weiteren kann hierdurch eine Vergleichbarkeit des Erfassungsbereichs umgesetzt werden. Die Größe der sensorisch erfassbaren Flächen kann technisch einfach ermittelt zu Vergleichszwecken herangezogen werden.

Bei einem weiteren Ausführungsbeispiel wird der Erfassungsbereich vergrößert, wenn eine Gesamtlänge und/oder Gesamtfläche der durch die Rechtecke angenäherten Fahrspurintervalle steigt. Durch diese Maßnahme kann ein besonders effizienter Parameter für eine Auswahl von Fahrmanövern bereitgestellt werden. Insbesondere kann die Gesamtlänge oder die Gesamtfläche technisch einfach ermittelt und zu Vergleichszwecken herangezogen werden.

Nach einer weiteren Ausführungsform werden Daten über eine Kommunikationsverbindung empfangen, wobei das Sensormodell anhand der empfangenen Messdaten und anhand der über die Kommunikationsverbindung empfangenen Daten erstellt wird. Durch diese Maßnahme kann das Sensormodell präziser ausgestaltet sein, da zusätzliche Messdaten von Verkehrsteilnehmern oder von Infrastruktureinheiten empfangen werden. Die Daten können vorzugsweise über eine Vehicle-2-Infrastructure oder eine Vehicle-2-Vehicle Kommunikationsverbindung empfangen werden. Insbesondere kann hierdurch eine präzisere Vorhersage von einem zukünftigen Verhalten der Verkehrsteilnehmer erfolgen.

Im Folgenden werden anhand von stark vereinfachten schematischen Darstellungen bevorzugte Ausführungsbeispiele der Erfindung näher erläutert. Hierbei zeigen
- Fig. 1: ein schematisches Ablaufdiagramm zum Veranschaulichen des Verfahrens gemäß einer Ausführungsform,
- Fig. 2: eine Draufsicht auf eine beispielhafte Verkehrssituation und
- Fig. 3: eine Draufsicht auf die in Fig. 2 gezeigte Verkehrssituation zu einem späteren Zeitpunkt.

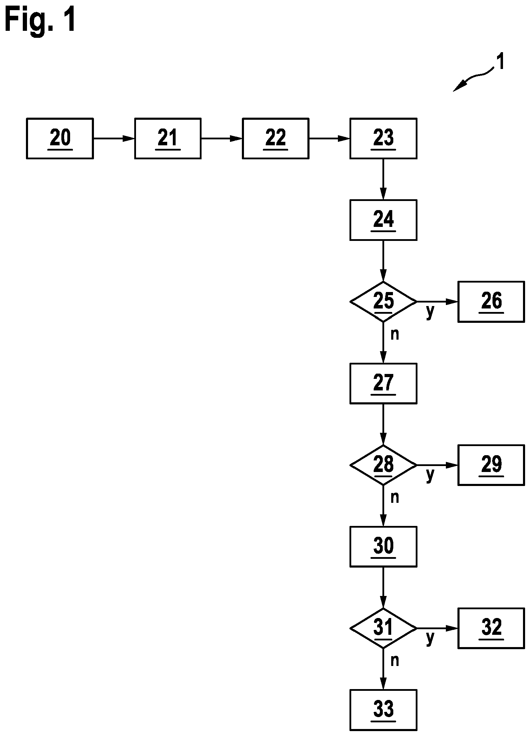

Die Figur 1 zeigt ein schematisches Ablaufdiagramm zum Veranschaulichen des Verfahrens 1 gemäß einer Ausführungsform. Das Verfahren dient zum Bestimmen eines Fahrmanövers eines Fahrzeugs 2, welches automatisiert betreibbar ist. Das Verfahren 1 kann vorzugsweise durch ein Steuergerät 4 ausgeführt werden.

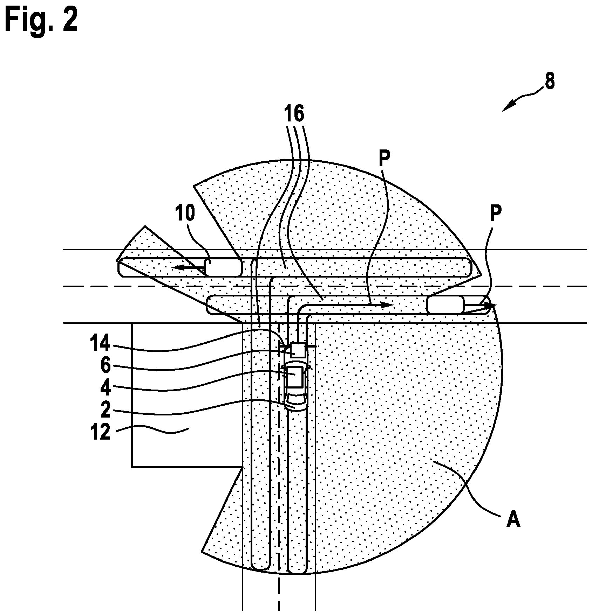

Das Fahrzeug 2 ist beispielhaft in der Figur 2 dargestellt und weist neben dem Steuergerät 4 eine Umfeldsensorik 6 auf. Die Umfeldsensorik 6 kann aus einem oder mehreren Sensoren bestehen. Beispielsweise kann die Umfeldsensorik 6 Radarsensoren, LIDAR-Sensoren, Ultraschallsensoren, Kamerasensoren und dergleichen aufweisen.

In einem Schritt 20 werden Messdaten über eine Verkehrssituation 8 mindestens eines Sensors 6 empfangen. Das Verfahren 1 kann durch eine erkannte Verkehrssituation 8, wie beispielsweise Kreuzung oder Auffahrt auf eine Hauptstraße, ausgelöst werden.

Anschließend wird ein gegenwärtiger Erfassungsbereich durch Auswerten der empfangenen Messdaten ermittelt 21.

Basierend auf den empfangenen Messdaten wird ein Sensormodell erstellt und ein abgeschätzter Erfassungsbereich des mindestens einen Sensors 6 durch Vorwärtssimulation basierend auf einer Fahrzeugposition des Fahrzeugs 2 aus den empfangenen Messdaten modelliert 22. Die Vorwärtssimulation erfolgt durch das Sensormodell und ermöglicht die Abschätzung einer voraussichtlichen Änderung des Erfassungsbereichs durch Positionsänderung des Sensors 6.

Das erstellte Sensormodell wird dazu eingesetzt, eine Änderung des Erfassungsbereichs durch mindestens ein Fahrmanöver zu ermitteln 23. Hierzu werden beispielhaft mehrere unterschiedliche Fahrmanöver geprüft, ob sie den Erfassungsbereich vergrößern oder verkleinern. Die Änderung des Erfassungsbereichs wird durch ein Ausführen von einem oder mehreren Fahrmanövern durch das Sensormodell ermittelt.

Im dargestellten Ausführungsbeispiel werden mehrere beispielhafte Fahrmanöver nacheinander ausgeführt bzw. geprüft. Alternativ hierzu kann eine parallele Prüfung der möglichen Fahrmanöver umgesetzt werden.

In einem weiteren Schritt 24 wird durch das Sensormodell ein Hineinfahren des Fahrzeugs 2 in die Kreuzung bzw. einen Verkehrsknotenpunkt simuliert und die Änderung des Erfassungsbereichs ermittelt.

Wird der Erfassungsbereich gegenüber dem initialen Erfassungsbereich erhöht 25 oder ein sicheres Ausführen des Fahrmanövers attestiert, so kann ein Ausführen des Fahrmanövers durch das Steuergerät 4 eingeleitet 26 werden. Wird diese Anfrage 25 verneint, so kann das nächste Fahrmanöver 27 geprüft werden.

Als nächstes Fahrmanöver kann beispielsweise ein Stehenbleiben des Fahrzeugs 2 an der initialen Position durch das Sensormodell geprüft werden.

Bei der Prüfung wird die Änderung des Erfassungsbereichs ermittelt 28. Ist die Verkehrssicherheit bei einem Stehenbleiben gewährleistet und wird der Erfassungsbereich durch ein Stehenbleiben erhöht, beispielsweise weil Verkehrsteilnehmer den Abtastbereich der Umfeldsensorik 6 verlassen, so wird ein Stehenbleiben durch das Steuergerät 4 eingeleitet 29. Andernfalls wird das nächste Fahrmanöver 30 geprüft.

Als nächstes Fahrmanöver kann ein langsames Herantasten 30 an den Verkehrsknotenpunkt durch das Sensormodell betrachtet werden. Wird ein derartiges Fahrmanöver als sicher eingestuft und ermöglicht eine Vergrößerung des Erfassungsbereichs 31, so leitet das Steuergerät 4 das langsame Herantasten des Fahrzeugs 2 an den Verkehrsknotenpunkt 32 ein. Wird diese Prüfung 31 verneint bzw. als negativ eingestuft, so kann das Fahrzeug 2 an seiner initialen Position verbleiben 33.

In Figur 2 ist eine Draufsicht auf eine beispielhafte Verkehrssituation 8 dargestellt. Es sind dynamische Objekte 10 bzw. Hindernisse und statische Objekte 12 bzw. Hindernisse vorhanden.

Die dynamischen Objekte 10 sind beispielsweise Verkehrsteilnehmer, welche den Abtastbereich A des Fahrzeugs 2 bereichsweise verdecken. Die statischen Objekte 12 können Gebäude oder abgestellte Verkehrsteilnehmer berücksichtigt werden.

Die Pfeile P veranschaulichen die geplanten Trajektorien der Verkehrsteilnehmer 10 und des Fahrzeugs 2.

In der dargestellten Verkehrssituation 8 hält Fahrzeug 2 an einer Haltelinie 14 vor einer T-Kreuzung. Zum Durchführen einer Entscheidung wird das Verfahren 1 durch das Steuergerät 4 ausgeführt. Hierzu wird ein gegenwärtiger bzw. initialer Erfassungsbereich der Umfeldsensorik 6 ermittelt.

Der Erfassungsbereich und insbesondere eine Dimension bzw. Größe des Erfassungsbereichs wird anhand der sensorisch detektierten Fahrspurintervalle 16 bestimmt. Die Fahrspurintervalle 16 sind die im Abtastbereich A erkannten Abschnitte der Fahrspuren und werden durch Rechtecke angenähert.

Die Rechtecke weisen unterschiedliche Längen bzw. Breiten auf und können zum Bestimmen der Größe des Erfassungsbereichs herangezogen werden. Beispielsweise kann eine Gesamtlänge oder eine Gesamtfläche der ermittelten Fahrspurintervalle 16 als Maß für den Erfassungsbereich verwendet werden.

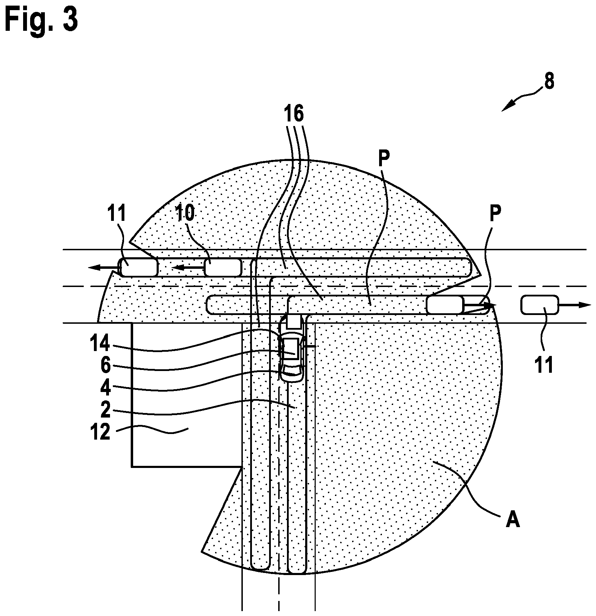

Die Figur 3 zeigt eine Draufsicht auf die in Figur 2 gezeigte Verkehrssituation 8 zu einem späteren Zeitpunkt. Das Fahrzeug 2 hat sich langsam an den Verkehrsknotenpunkt bzw. die T-Kreuzung herangetastet und die Haltelinie 14 überfahren, wobei die relativen Positionen der statischen Objekte 12 und der dynamischen Objekte 10 zum Fahrzeug 2 sich verändert haben.

Durch das durchgeführte Fahrmanöver hat sich der Abtastbereich A verändert und der Erfassungsbereich vergrößert. Hierdurch sind zusätzliche dynamische Verkehrsteilnehmer 11 sensorisch erfassbar und die Gesamtfläche oder Gesamtlänge der Fahrspurintervalle 16 größer gegenüber der Situation in Figur 2.

## Patentansprüche

1. Verfahren (1) zum Bestimmen eines Fahrmanövers eines Fahrzeugs (2) durch ein Steuergerät (4), wobei
- Messdaten über eine Verkehrssituation (8) mindestens eines Sensors (6) empfangen werden, **dadurch gekennzeichnet, dass**
- ein gegenwärtiger Erfassungsbereich des mindestens einen Sensors (6) durch Auswerten der empfangenen Messdaten ermittelt wird,
- ein Sensormodell anhand der empfangenen Messdaten erstellt und ein abgeschätzter Erfassungsbereich des mindestens einen Sensors (6) durch Vorwärtssimulation basierend auf einer Fahrzeugposition des Fahrzeugs (2) aus den empfangenen Messdaten modelliert wird,
- das erstellte Sensormodell dazu eingesetzt wird, eine Änderung des Erfassungsbereichs des mindestens einen Sensors (6) durch mindestens ein Fahrmanöver zu ermitteln,
- ein Fahrmanöver bestimmt wird, welches durch das Sensormodell zu einer Vergrößerung des simulierten Erfassungsbereichs führt.

2. Verfahren nach Anspruch 1, wobei das mindestens eine Fahrmanöver als ein langsames Vorausfahren, ein Einfahren in einen Verkehrsknotenpunkt, ein Abbiegen, ein Anhalten oder als ein Stehenbleiben ausgestaltet ist und zum Ermitteln einer Änderung des Erfassungsbereichs durch das erstellte Sensormodell herangezogen wird.

3. Verfahren nach Anspruch 1 oder 2, wobei der gegenwärtige Erfassungsbereich durch Erkennen von dynamischen Objekten (12) und/oder statischen Objekten (10) anhand der empfangenen Messdaten ermittelt wird.

4. Verfahren nach einem der Ansprüche 1 bis 3, wobei unterschiedliche Fahrmanöver parallel oder nacheinander durch das erstellte Sensormodell herangezogen werden, um eine Änderung des Erfassungsbereichs zu ermitteln.

5. Verfahren nach einem der Ansprüche 1 bis 4, wobei der gegenwärtige Erfassungsbereich anhand von sensorisch ermittelbaren Fahrspurintervallen (16) ermittelt wird, welche anhand der Messdaten ermittelte Fahrspuren durch Rechtecke unterschiedlicher Länge und/oder Breite annähern.

6. Verfahren nach Anspruch 5, wobei der Erfassungsbereich vergrößert wird, wenn eine Gesamtlänge und/oder eine Gesamtfläche der durch die Rechtecke angenäherten Fahrspurintervalle (16) steigen.

7. Verfahren nach einem der Ansprüche 1 bis 6, wobei Daten über eine Kommunikationsverbindung empfangen werden und das Sensormodell anhand der empfangenen Messdaten und anhand der über die Kommunikationsverbindung empfangenen Daten erstellt wird.

8. Steuergerät (4), wobei das Steuergerät (4) dazu eingerichtet ist, das Verfahren gemäß einem der Ansprüche 1 bis 7 auszuführen.

9. Computerprogramm, welches Befehle umfasst, die bei der Ausführung des Computerprogramms durch einen Computer oder ein Steuergerät (4) diesen veranlassen, das Verfahren gemäß einem der Ansprüche 1 bis 7 auszuführen.

10. Maschinenlesbares Speichermedium, auf welchem das Computerprogramm gemäß Anspruch 9 gespeichert ist.

## Claims

1. Method (1) for determining a driving maneuver of a vehicle (2) by means of a control unit (4), wherein
- measurement data relating to a traffic situation (8) are received from at least one sensor (6), **characterized in that**
- a current detection area of the at least one sensor (6) is determined by evaluating the received measurement data,
- a sensor model is created on the basis of the received measurement data and an estimated detection area of the at least one sensor (6) is modelled from the received measurement data through forward simulation based on a vehicle position of the vehicle (2),
- the created sensor model is used to determine a change in the detection area of the at least one sensor (6) due to at least one driving maneuver,
- a driving maneuver is determined which causes an increase in the simulated detection area due to the sensor model.

2. Method according to Claim 1, wherein the at least one driving maneuver is designed as a slow drive ahead, an entry into a traffic intersection, a turn, a stopping or remaining stationary, and is used to determine a change in the detection area by means of the created sensor model.

3. Method according to Claim 1 or 2, wherein the current detection area is determined by identifying dynamic objects (12) and/or static objects (10) on the basis of the received measurement data.

4. Method according to one of Claims 1 to 3, wherein different driving maneuvers are used in parallel or in succession by the created sensor model in order to determine a change in the detection area.

5. Method according to one of Claims 1 to 4, wherein the current detection area is determined on the basis of traffic lane intervals (16) determinable by sensors which approximate traffic lanes determined on the basis of the measurement data by means of rectangles of differing length and/or width.

6. Method according to Claim 5, wherein the detection area is increased if a total length and/or a total area of the traffic lane intervals (16) approximated by the rectangles increases.

7. Method according to one of Claims 1 to 6, wherein data are received via a communication connection and the sensor model is created on the basis of the received measurement data and on the basis of the data received via the communication connection.

8. Control unit (4), wherein the control unit (4) is configured to carry out the method according to one of Claims 1 to 7.

9. Computer program which comprises commands which, when the computer program is executed by a computer or a control unit (4), cause said computer to carry out the method according to one of Claims 1 to 7.

10. Machine-readable storage medium on which the computer program according to Claim 9 is stored.

## Revendications

1. Procédé (1) de détermination d'une manoeuvre de conduite d'un véhicule (2) par un contrôleur (4),
- des données de mesure à propos d'une situation de trafic (8) d'au moins un capteur (6) étant reçues, **caractérisé en ce que**
- une zone d'acquisition actuelle de l'au moins un capteur (6) est identifiée par interprétation des données de mesure reçues,
- un modèle de capteur est créé à l'aide des données de mesure reçues et une zone d'acquisition estimée de l'au moins un capteur (6) est modélisée à partir des données de mesure reçues par une simulation directe en se basant sur une position de véhicule du véhicule (2),
- le modèle de capteur créé est utilisé pour identifier une modification de la zone d'acquisition de l'au moins un capteur (6) par au moins une manoeuvre de conduite,
- une manoeuvre de conduite est déterminée, laquelle, par le biais du modèle de capteur, conduit à un agrandissement de la zone d'acquisition simulée.

2. Procédé selon la revendication 1, l'au moins une manoeuvre de conduite étant configurée en tant qu'une marche avant lente, une entrée dans un point nodal de trafic, une bifurcation, un arrêt ou une immobilisation et étant utilisée pour identifier une modification de la zone d'acquisition par le modèle de capteur créé.

3. Procédé selon la revendication 1 ou 2, la zone d'acquisition actuelle étant identifiée par reconnaissance d'objets dynamiques (12) et/ou d'objets statiques (10) à l'aide des données de mesure reçues.

4. Procédé selon l'une des revendications 1 à 3, différentes manoeuvres de conduite étant utilisées en parallèle ou les unes après les autres par le modèle de capteur créé, pour identifier une modification de la zone d'acquisition.

5. Procédé selon l'une des revendications 1 à 4, la zone d'acquisition actuelle étant identifiée à l'aide d'intervalles entre des voies de circulation (16) pouvant être identifiés par détection, lesquels se rapprochent des voies de circulation identifiées à l'aide des données de mesure par des rectangles de longueur et/ou de largeur différente.

6. Procédé selon la revendication 5, la zone d'acquisition étant agrandie lorsqu'une longueur totale et/ou une surface totale de l'intervalle entre des voies de circulation (16) approché par les rectangles augmente.

7. Procédé selon l'une des revendications 1 à 6, les données étant reçues par le biais d'une liaison de communication et le modèle de capteur étant créé à l'aide des données de mesure reçues et à l'aide des données reçues par le biais de la liaison de communication.

8. Contrôleur (4), le contrôleur (4) étant conçu pour mettre en œuvre le procédé selon l'une des revendications 1 à 7.

9. Programme informatique, lequel comprend des instructions qui, lors de l'exécution du programme informatique par un ordinateur ou un contrôleur (4), amènent l'ordinateur à mettre en œuvre le procédé selon l'une des revendications 1 à 7.

10. Support d'enregistrement lisible par machine, sur lequel est enregistré le programme informatique selon la revendication 9.
